# EUROPÄISCHE PATENTSCHRIFT

(11) **EP 2 877 475 B1**
(45) Veröffentlichungstag und Bekanntmachung des Hinweises auf die Patenterteilung: **23.11.2016**
(21) Anmeldenummer: 13725367.0
(22) Anmeldetag: 28.05.2013
(51) Int. Cl.: C07F 7/12, B01J 19/24

(54) **VERFAHREN ZUR HERSTELLUNG VON ALKENYLHALOGENSILANEN UND DAFÜR GEEIGNETER REAKTOR**
METHOD FOR THE PRODUCTION OF ALKENYL HALOSILANES, AND REACTOR SUITED THEREFOR
PROCÉDÉ DE PRÉPARATION D'HALOSILANES D'ALCÉNYLE ET RÉACTEUR À CET EFFET

(30) Priorität: 24.07.2012 DE 102012212915
(43) Veröffentlichungstag der Anmeldung: 03.06.2015
(73) Patentinhaber: Evonik Degussa GmbH, 45128 Essen (DE)
(72) Erfinder: BADE, Stefan, 68220 Michelbach le Haut (FR); SCHLADERBECK, Norbert, 65779 Kelkheim (DE)
(86) Internationale Anmeldenummer: PCT/EP2013/060910
(87) Internationale Veröffentlichungsnummer: WO 2014/016014

(56) Entgegenhaltungen:
- EP-A1- 1 180 521
- DE-A1- 19 727 576
- US-A1- 2006 047 147

## Beschreibung

Die vorliegende Erfindung betrifft ein Verfahren zur Herstellung von Alkenylhalogensilanen, insbesondere von Vinyltrichlorsilan aus Vinylchlorid und Trichlorsilan, sowie einen dafür besonders geeigneten Reaktor.

Die großtechnische Herstellung von Alkenylhalogensilanen ist allgemein bekannt. Stellvertretend für die Herstellung von Alkenylhalogensilanen wird hier die groß-technische Herstellung von Vinyltrichlorsilan (III) näher beschrieben. Diese erfolgt aus den Rohstoffen Vinylchlorid (I) und Trichlorsilan (II). Dabei wird in einer radikalisch ablaufenden Hochtemperaturreaktion Silan (II) mit Vinylchlorid (I) unter Abspaltung von Chlorwasserstoff (IV) gemäß dem nachstehenden Reaktionsschema (1) kombiniert:

C₂H₃Cl (I) + SiHCl₃ (II) → C₂H₃SiCl₃ (III) + HCl (IV) (1)

Alkenylhalogensilane, wie Vinyltrichlorsilan (III), insbesondere die Gruppe der aus der Verbindung (III) über Veresterungsreaktionen hergestellten Vinyltrialkoxysilane, sind wichtige technische Zwischen- oder Endprodukte in der Organosilanchemie. Sie finden ihren Einsatz beispielsweise als Vernetzer in Kunststoffen, wie PVC, PP und PE.

Neben der oben dargestellten Hauptreaktion erfolgen bei der Umsetzung mehrere unerwünschte Nebenreaktionen. Darunter sind beispielsweise zu nennen:
A) Bildung von Siliciumtetrachlorid (V) gemäß nachstehendem Schema (2):

   SiHCl₃(II) + HCl (IV) → SiCl₄ (V) + H₂ (VI) (2)
B) Bildung von Bis(trichlorsilyl)ethan (VII) gemäß nachstehendem Schema (3):

   SiHCl₃ (II) + C₂H₃SiCl₃ (III) → Cl₃Si C₂H₄SiCl₃ (VII) (3)
C) Bildung von Ruß (VIII) gemäß nachfolgendem Schema (4):

   C₂H₃Cl (I) → 2 C (VIII) + HCl (IV) + H₂ (VI) (4)

Die radikalisch verlaufende, exotherme Substitutionsreaktion zwischen Vinylchlorid und Trichlorsilan erfolgt typisch in einem Hochtemperaturreaktor im Temperatur-bereich zwischen 400 und 700 °C und einem Druck zwischen 1 und 2 bar abs. Die gängigen Verfahren sind dadurch gekennzeichnet, dass entweder ein Rohrreaktor oder ein Reaktor mit einem rotierenden Verdrängerkörper eingesetzt wird. Beispiele dafür finden sich in den EP 0 438 666 A2, der DE 199 18 114A1 und der DE 199 18 115A1.

Die bestehenden Verfahren weisen mehrere Nachteile auf. Dabei handelt es sich um die durch Rückvermischung entstehenden Nebenprodukte, um Wandreaktionen, die beispielsweise zur Bildung von Ruß (Reaktionsschema 4) führen und um die schwierige Temperaturkontrolle.

Weiterhin kann der Umsatz des Vinylchlorids nur im Bereich von maximal 80 % eingestellt werden, die Selektivität bezüglich Vinyltrichlorsilan liegt dann bei maximal ca. 86 %. Bei Umsätzen > 80 % sinkt die Selektivität aufgrund der ablaufenden Nebenreaktionen erheblich.

Infolge der Rußbildung beim Einsatz herkömmlicher Reaktoren müssen diese in regelmäßigen Abständen abgefahren und gereinigt werden.

In EP 0 438 666 A2 wird ein Ringspaltreaktor mit einem Spaltmaß von 20mm beschrieben. Der Ringspalt wird über einen rotierenden Verdrängerkörper innerhalb der Reaktorhülle gebildet. Ebenso wird in den Dokumenten DE 199 18 114 A1 und DE 199 18 115 A1 ein Ringspaltreaktor für die Produktion von Vinyltrichlorsilan beschrieben, in dem nach dem Durchströmen des Ringspaltes eine adiabate Reaktionszone durchlaufen wird und anschließend die Reaktionsgase gequencht werden.

Eine typische aus DE 199 18 115 A1 bekannte Verfahrensführung resultiert in einem Vinylchlorid-Umsatz von 85 % und einer Vinyltrichlorsilan-Selektivität, bezogen auf umgesetztes Vinylchlorid, von 88 %. Bei Einspeisung von 100 kg/h Vinylchlorid und 700 kg/h Trichlorsilan ergeben sich die folgende Massenströme der Reaktions-mischung am Ausgang des Reaktors:

| | |
|---|---|
| Vinylchlorid = 14,9 kg/h | Trichlorsilan = 495,2 kg/h |
| Vinyltrichlorsilan = 193,3 kg/h | Chlorwasserstoff = 43,6 kg/h |
| Siliciumtetrachlorid = 38,1 kg/h | Hochsieder/weitere |
| | Nebenkomponenten = 15,1 kg/h |

Die Produktionsleistung des beschriebenen Reaktors liegt bei 139 t Vinyltrichlorsilan pro Monat bzw. spezifisch als Raumzeitausbeute bei 900 kg/(m³*h).

Eine typische aus DE 199 18 114 A1 bekannte Verfahrensführung resultiert in einem Vinylchlorid-Umsatz von 86 % und einer Vinyltrichlorsilan-Selektivität, bezogen auf umgesetztes VC, von 89 %. Bei Einspeisung von 70 kg/h Vinylchlorid und 420 kg/h Trichlorsilan ergeben sich die folgende Massenströme der Reaktionsmischung am Ausgang des Reaktors:

| | |
|---|---|
| Vinylchlorid = 9,8 kg/h | Trichlorsilan = 274,8 kg/h |
| Vinyltrichlorsilan = 138,5 kg/h | Chlorwasserstoff = 32,2 kg/h |
| Siliciumtetrachlorid = 20,8 kg/h | Hochsieder/weitere |
| | Nebenkomponenten = 15,5 kg/h |

Die Produktionsleistung des beschriebenen Ringspaltreaktors liegt bei 100 t Vinyltrichlorsilan pro Monat bzw. spezifisch als Raumzeitausbeute bei 648 kg/(m³*h).

In diesen beiden Vergleichsbeispielen sind maximale Vinylchlorid-Umsätze von 86 % beschrieben, maximale Vinyltrichlorsilan-Selektivitäten von 89 % und eine maximale Vinyltrichlorsilan-Raumzeitausbeute von 900 kg/(m³*h).

DE 197 27 576A1 offenbart ein Verfahren in dem Vinylchlorid zusammen mit Trichlorsilan in einem vertikalen Wirbelschichtreaktor unterhalb der Siebplatte des Reaktors zugeführt wird.

EP1 180 521 A1 offenbart ein Verfahren in dem Propyltrichlorsilan mit Chlor zu Allyltrichlorsilan in einem beheizten Reaktor umgesetzt wird und Chlor abschnittsweise im ersten Abschnitt des Reaktors zudosiert wird.

Ferner offenbart US 2006/047147 A1 einen Reaktor für Gasphasenreaktionen.

Überraschenderweise wurde nun gefunden, dass bei Verwendung eines neuartigen Reaktors vom Typ "Horden-Reaktor" die Ausbeute und die Selektivität bezüglich des Zielproduktes Alkenylhalogensilan, insbesondere von Vinyltrichlorsilan (III) gegenüber den bisherigen Verfahren deutlich gesteigert werden kann. Darüber hinaus erfolgt eine schonende Verfahrensführung, so dass die Tendenz zum Ablauf von Nebenreaktionen deutlich verringert werden kann und die Bildung von Nebenprodukten, wie Russ, drastisch reduziert werden kann.

Aufgabe der vorliegenden Erfindung ist die Bereitstellung eines Verfahrens zur Herstellung von Alkenylhalogensilanen mit gegenüber bekannten Verfahren und Reaktoren gesteigerter Ausbeute und Selektivität sowie mit verringerter Tendenz zu Nebenreaktionen.

Die vorliegende Erfindung betrifft ein Verfahren zur Herstellung von Alkenylhalogen-silanen durch Umsetzung von Alkenylhalogenid ausgewählt aus der Gruppe Vinylhalogenid, Vinylidenhalogenid oder Allylhalogenid mit Halogensilan ausgewählt aus der Gruppe Mono-, Di- oder Trihalogensilan in der Gasphase in einem Reaktor, der ein mit einem Einlass (2) an einem Rohrende und mit einem Auslass (3) an dem anderen Rohrende ausgestattetes Reaktionsrohr (1) umfasst sowie eine Gaseinleitungsvorrichtung (4) aufweist, die mehrere, in Richtung der Längsachse des Reaktionsrohres (1) voneinander beabstandete und in das Reaktionsrohr (1) mündende Gaseinspeisestellen (5) aufweist, wobei Mono-, Di- oder Trihalogensilan durch den Einlass (2) in das Reaktionsrohr (1) geleitet wird und in Richtung Auslass (3) durch das Reaktionsrohr (1) strömt, und wobei Vinylhalogenid, Vinylidenhalogenid oder Allylhalogenid abschnittsweise durch die Gaseinspeisestellen (5) in den Gasstrom im Innern des Reaktionsrohres (1) eingeleitet wird.

Unter Halogen ist im Rahmen dieser Beschreibung Fluor, Chlor, Brom oder Iod zu verstehen, vorzugsweise Chlor und Brom, insbesondere Chlor.

Bei den erfindungsgemäß eingesetzten Vinylhalogeniden handelt es sich um Vinylfluorid, Vinylchlorid, Vinylbromid und Vinyliodid oder um Gemische von zwei oder mehreren davon. Bevorzugt wird Vinylchlorid und/oder Vinylbromid eingesetzt, ganz besonders bevorzugt Vinylchlorid.

Bei den erfindungsgemäß eingesetzten Vinylidenhalogeniden handelt es sich um Vinylidenfluorid, Vinylidenchlorid, Vinylidenbromid und Vinylideniodid oder um Gemische von zwei oder mehreren davon. Bevorzugt wird Vinylidenchlorid und/oder Vinylidenbromid eingesetzt, ganz besonders bevorzugt Vinylidenchlorid.

Bei den erfindungsgemäß eingesetzten Allylhalogeniden handelt es sich um Allylfluorid, Allylchlorid, Allylbromid und Allyliodid oder um Gemische von zwei oder mehreren davon. Bevorzugt wird Allylchlorid und/oder Allylbromid eingesetzt, ganz besonders bevorzugt Allylchlorid.

Bei den erfindungsgemäß eingesetzten Monohalogensilanen handelt es sich um Monofluorsilan, Monochlorsilan, Monobromsilan und Monoiodsilan oder um Gemische von zwei oder mehreren davon. Bevorzugt wird Monochlorsilan und/oder Monobromsilan eingesetzt, ganz besonders bevorzugt Monochlorsilan.

Bei den erfindungsgemäß eingesetzten Dihalogensilanen handelt es sich um Verbindungen der Formel (Hal1)(Hal2)SiH₂, wobei Hal1 und Hal2 unabhängig voneinander Fluor, Chlor, Brom oder Iod bedeuten. Beispiele für Dihalogensilane sind Difluorsilan, Dichlorsilan, Dibromsilan, Diiodsilan oder gemischte Typen, wie Chlorbromsilan, Fluorchlorsilan oder Chloriodsilan. Es kann sich auch um Gemische von zwei oder mehreren davon handeln. Bevorzugt werden Dihalogensilane eingesetzt, in denen Hal1 und Hal2 die gleiche Bedeutung haben. Ganz besonders bevorzugt wird Dichlorsilan und/oder Dibromsilan eingesetzt, und insbesondere Dichlorsilan.

Bei den erfindungsgemäß eingesetzten Trihalogensilanen handelt es sich um Verbindungen der Formel (Hal1)(Hal2)(Hal3)SiH, wobei Hal1, Hal2 und Hal3 unabhängig voneinander Fluor, Chlor, Brom oder Iod bedeuten. Beispiele für Trihalogensilane sind Trifluorsilan, Trichlorsilan, Tribromsilan, Triiodsilan oder gemischte Typen, wie Fluor-chlor-bromsilan, Dichlorbromsilan oder Chlordibromsilan. Es kann sich auch um Gemische von zwei oder mehreren davon handeln. Bevorzugt werden Trihalogensilane eingesetzt, in denen Hal1, Hal2 und Hal3 die gleiche Bedeutung haben. Ganz besonders bevorzugt wird Trichlorsilan und/oder Tribromsilan eingesetzt, und insbesondere Trichlorsilan.

Ganz besonders bevorzugt werden Trichlorsilan und Vinylchlorid oder Trichlorsilan und Allylchlorid miteinander umgesetzt.

Im erfindungsgemäßen Reaktor wird das Alkenylhalogenid über mehrere Gaseinspeisestellen (5) hinweg in den strömenden Mono-, Di- oder Trihalogensilan-Gasstrom eingespeist. Die Gaseinspeisestellen (5) sind in Richtung der Längsachse des Reaktionsrohres (1) beabstandet angeordnet und gestatten das abschnittsweise Einleiten von Gas in das Reaktionsrohr (1). Die Gaseinspeisestellen (5) münden vorzugsweise mittig im Reaktionsrohr (1), so dass das eingeleitete Gas abschnitts-weise am Ort der Längsachse des Reaktionsrohres (1) eingeleitet wird. Es sind aber auch Varianten möglich, bei denen ein oder mehrere Gaseinspeisestellen (5) nicht mittig am Ort der Längsachse des Reaktionsrohres (1) münden. Der Reaktor ist rückvermischungsarm und die Reaktionen werden von der Reaktorwand ferngehalten, was zu einer verminderten Bildung von Nebenprodukten führt.

Weiterhin wird durch die Reaktionsführung (= Aufteilung des Alkenylhalogenid-Stromes auf mehrere Einspeisestellen im Reaktor) ein optimales Temperaturprofil im Reaktor erzeugt, wodurch die Selektivität und die Raumzeitausbeute bezüglich des Zielproduktes Alkenylhalogensilan besonders vorteilhaft gesteigert werden können.

Durch die Vermeidung von rotierenden Einbauten, wie in EP 0 438 666 A2, DE 199 18 114 A1 und DE 199 18 115 A1 beschrieben, wird die Konstruktion des Reaktors deutlich einfacher und weniger aufwändig für die Instandhaltung.

Das Mono-, Di- oder Trihalogensilan kann beim erfindungsgemäßen Verfahren vollständig am Einlass (2) in das Reaktionsrohr (1) eingespeist werden. Alternativ kann ein Teil des Mono-, Di- oder Trihalogensilans am Einlass (2) in das Reaktions-rohr (1) eingespeist werden und der verbleibende Teil wird über ein oder mehrere Gaseinleitungsvorrichtungen (4) in die Mitte des Reaktionsrohres (1) eingespeist.

Bevorzugt wird ein Verfahren, wobei am Einlass (2) nur Mono-, Di- oder Trihalogensilan eingespeist wird, während über die Länge des Reaktionsrohres (1) verteilt an mehreren Stellen Alkenylhalogenid in das im Innern des Reaktionsrohres (1) strömende Gasgemisch eingespeist wird. Das Alkenylhalogenid wird insbesondere in die Hauptströmungsrichtung aufgegeben.

Durch die Gaseinleitungsvorrichtung (4) werden Gaseinspeisestellen (5) für das Alkenylhalogenid in das Reaktionsrohr (1) bereit gestellt. Die Zahl der Gaseinspeise-stellen (5) kann über einen weiten Bereich variieren. Typischerweise sind zwei bis zehn Gaseinspeisestellen (5), bevorzugt drei bis sechs Gaseinspeisestellen (5) vorgesehen.

Der Abstand zwischen zwei Gaseinspeisestellen (5) kann ebenfalls in weiten Bereichen schwanken. Typischerweise beträgt dieser Abstand zwischen 100 mm und 2000 mm. Die Gaseinspeisestellen (5) sind vorzugsweise äquidistant angeordnet; es kann aber auch eine beliebige andere Anordnung gewählt werden.

Die Einspeisung des Alkenylhalogenids erfolgt in der Regel nach der Zuführung des Mono-, Di- oder Trihalogensilans in den Reaktor. Typischerweise beträgt der Abstand zwischen der ersten Gaseinspeisestelle (5) und dem Einlass (2) zwischen 20mm und 1000mm.

Durch die Variation des Mengenstroms des Alkenylhalogenids an den Gaseinspeise-stellen (5) kann der Verlauf der Reaktion gesteuert werden. Bevorzugt sind daher an der Gaseinleitungsvorrichtung (4) Mittel vorgesehen, mit denen der Mengenstrom des Alkenylhalogenids an den Gaseinspeisestellen (5) variiert werden kann.

Vorzugsweise wird der Mengenstrom des Alkenylhalogenids zwischen den verschiedenen Gaseinspeisestellen (5) gleichmäßig aufgeteilt; alternativ kann der Mengenstrom des Alkenylhalogenids zwischen den verschiedenen Gaseinspeisestellen (5) beliebig variiert werden. Bevorzugt wird dabei als Minimal-Menge pro Gaseinspeisestelle (5) ein Mengenstrom Alkenylhalogenid/(n·5) gewählt, und als Maximal-Menge pro Gaseinspeisestelle (5) wird ein Mengenstrom Alkenylhalogenid/(n·½) gewählt. Dabei bedeutet n die Gesamtzahl der Gaseinspeisestellen (5) im Reaktor, geeigneterweise ist n größer gleich 2, vorzugsweise 3 bis 15, besonders vorzugsweise 4 bis 13, ganz besonders vorzugsweise 5 bis 12, insbesondere auch 6, 7, 8, 9, 10 sowie 11.

Durch das Einsatzverhältnis von Mono-, Di- oder Trihalogensilan zu Alkenylhalogenid kann die Reaktion ebenfalls gesteuert werden. Typischerweise beträgt das Einsatzverhältnis von Mono-, Di- oder Trihalogensilan zu Alkenylhalogenid zwischen 1,0 und 10 mol : mol, bevorzugt zwischen 2,0 und 4,0 mol : mol.

Am Ende des Reaktionsrohres (1) ist die Umsetzung von Mono-, Di- oder Trihalogensilan mit Alkenylhalogenid weitgehend abgeschlossen. Das Produkt enthaltende Reaktionsgemisch kann über den Auslass (3) aus dem Reaktionsrohr (1) abgeleitet und weiteren Operationen zugeführt werden, beispielsweise einer Abtrennung des Produktes Alkenylhalogensilan aus dem Reaktionsgemisch.

Vorzugsweise wird das heiße Reaktionsgemisch am produktseitigen Ende des Reaktionsrohres (1) durch Abschrecken gequencht. Dieses kann bevorzugt mit flüssigem Rohprodukt erfolgen, welches vorzugsweise am produktseitigen Ende des Reaktionsrohres (1) in das heiße Reaktionsgemisch eingedüst wird.

Beim erfindungsgemäßen Verfahren kann die Reaktionstemperatur in weiten Bereichen gewählt werden. Vorzugsweise beträgt die Temperatur im Innern des Reaktionsrohres (1) (= die Reaktionstemperatur) zwischen 400 und 700 °C, besonders bevorzugt zwischen 500 und 650 °C.

Beim erfindungsgemäßen Verfahren kann der Reaktionsdruck ebenfalls in weiten Bereichen gewählt werden. Vorzugsweise beträgt der Druck im Innern des Reaktionsrohres (1) (= Reaktionsdruck) zwischen 1,0 und 2,0 bar abs, besonders bevorzugt zwischen 1,0 und 1,5 bar abs.

Der Verlauf der Reaktion kann durch die Menge der zugegebenen Reaktanten gesteuert werden. Bevorzugt werden die Teilmengenströme von Alkenylhalogenid an den Einspeisestellen gesteuert eingestellt. Die Steuerung kann durch Temperatur-Regelkreise an den Gaseinspeisestellen (5) erfolgen.

Die Verweilzeit des Reaktionsgemisches im Reaktor kann ebenfalls über weite Bereiche variiert werden. Typischerweise bewegt sich die Verweilzeit des Reaktionsgemisches im Reaktor von der ersten Gaseinspeisestelle (5) bis zum Auslass (3) im Bereich zwischen 0,5 und 10 sec, bevorzugt zwischen 1,5 und 4 sec.

Das vorliegende Verfahren betrifft auch einen Rohrreaktor, der sich zur Durchführung von Gasphasenreaktionen und insbesondere zur Durchführung des oben beschriebenen Verfahrens Herstellung von Alkenylhalogensilan eignet.

Ein solcher Reaktor ist durch die Anwesenheit mindestens der folgenden Elemente gekennzeichnet:
A) Reaktionsrohr (1) mit
B) einem Einlass (2) an einer Rohrseite,
C) einem Auslass (3) an der anderen Rohrseite, sowie
D) mit einer Gaseinleitungsvorrichtung (4), die mehrere, in Richtung der Längsachse des Reaktionsrohres (1) voneinander beabstandete und in das Reaktionsrohr (1) mündende Gaseinspeisestellen (5) aufweist und
E) eine Leitung (10) vorgesehen ist, durch welche ein Teil des Produktes (9) in die Nähe des Auslasses (3) zurückgeführt und in das dort befindliche Reaktionsgemisch eingedüst wird, wodurch ein schockartiges Abkühlen des Reaktionsgemisches und ein Ausbilden des abgekühlten Produktes (9) bewirkt wird.

Durch das abschnittsweise Eindüsen von Reaktanten durch mehrere in das Reaktionsrohr (1) mündende Gaseinspeisestellen (5) wird eine abschnittsweise Reaktionsführung bewirkt, so dass man von dem erfindungsgemäßen Reaktor auch von einem Hordenreaktor sprechen kann.

Die Materialien, aus denen sich sowohl des Reaktionsrohr (1) also auch die Gaseinleitungsvorrichtung (4) hergestellt sind, sind hochtemperaturbeständig. Diese Materialien umfassen beispielsweise eisenhaltige Legierungen, wie z.B. zunderfeste Stähle, die neben Eisen als Legierungsbestandteil Chrom, Nickel und/oder Titan und/oder Molybdän enthalten.

Der Reaktor zur Herstellung von Alkenylhalogensilanen durch Umsetzung von Alkenylhalogenid mit Mono-, Di- oder Trihalogensilanen kann sowohl horizontal, vertikal als auch schräg angeordnet sein. Die Art der Anbringung des Reaktors hat keinen Einfluss auf die Alkenylhalogensilan-Erträge der Reaktionseinheit. Es hat sich jedoch gezeigt, dass die Haltbarkeit vertikal angeordneter Reaktoren wesentlich länger ist als diejenige von Reaktoren , die in horizontaler Lage betrieben werden.

Die Beheizung des Reaktors, d.h. des äußeren Reaktionsrohres (1) kann auf unterschiedlichste Art und Weise erfolgen. Die am häufigsten angewendete Art besteht in der direkten elektrischen Beheizung der Außenfläche des Reaktionsrohres (1). Eine andere Form der Beheizung besteht darin, das äußere Rohr über ein Zwischenmedium, um Beispiel flüssiges Blei, zu erwärmen. Auch die Erwärmung des äußeren Rohres durch Gasflammen oder durch Infrarotstrahlung ist möglich. Die Art der Reaktorerwärmung beeinflusst die pro Reaktorquerschnittsfläche erzielbaren Umsätze nur unwesentlich.

Bevorzugt wird ein Reaktor, bei dem sich im Anschluss an den Einlass (2) eine Vorheizzone (6) befindet, in welcher der Reaktant (7) im Innern des Reaktionsrohres (1) auf die erforderliche Reaktionstemperatur aufgeheizt wird.

Bevorzugt wird ein Reaktor, bei dem Auslass (3) in einen Vorratsbehälter (8) für das abgekühlte Produkt (9) mündet.

Bei dieser Reaktorvariante ist vorzugsweise eine Leitung (10) vorgesehen, durch welche ein Teil des Produktes (9) in die Nähe des Auslasses (3) zurückgeführt und in das dort befindliche Reaktionsgemisch eingedüst wird, wodurch ein schockartiges Abkühlen des Reaktionsgemisches und ein Ausbilden des abgekühlten Produktes (9) bewirkt wird.

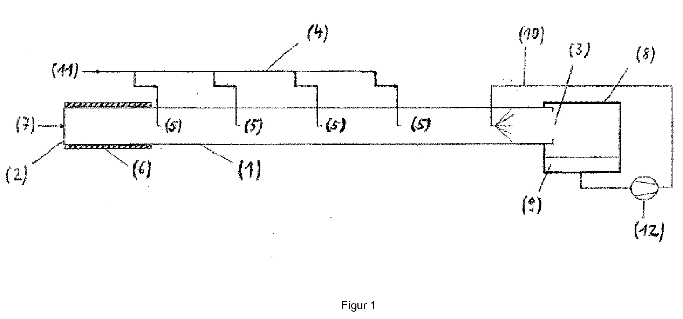

In der Figur 1 werden das erfindungsgemäße Verfahren bzw. der nichterfindungsgemäße Reaktor beschrieben. Dargestellt ist das Reaktionsrohr (1), das auf der linken Seite mit einem Einlass (2) für einen Reaktanten (7), beispielsweise für Trichlorsilan, ausgestattet ist. Im Anschluss an den Einlass (2) befindet sich eine Vorheizzone (6), in welcher der Reaktant (7) auf die erforderliche Reaktionstemperatur aufgeheizt wird. In das Reaktionsrohr (1) münden mehrere Gaseinspeisestellen (5), die von einer Gaseinleitungsvorrichtung (4) gespeist werden. Die Mündung dieser Gaseinspeisestellen (5) liegt dabei jeweils in der Mitte des Rohrquerschnitts. Durch die Gaseinspeisestellen (5) wird abschnittsweise ein weiterer Reaktant (11), beispielsweise Vinylchlorid, in das sich im Innern des Reaktionsrohres (1) befindende Reaktionsgemisch eingedüst. Das Reaktionsrohr (1) endet auf der rechten Seite mit einem Auslass (3) für das Reaktionsgemisch. Dieser Auslass (3) mündet in einen Vorratsbehälter (8) für das abgekühlte Produkt (9). Ein Teil des Produktes (9) wird über Leitung (10) unter Einwirkung der Pumpe (12) in die Nähe des Auslasses (3) zurückgeführt und in das dort befindliche Reaktionsgemisch eingedüst. Das hat ein schockartiges Abkühlen des Reaktionsgemisches und ein Ausbilden des abgekühlten Produktes (9) zur Folge. Dieses wird sodann über Auslass (3) in den Vorratsbehälter (8) geleitet.

Das nachstehende Beispiel beschreibt die Erfindung in näheren Einzelheiten, ohne dass dadurch eine Beschränkung beabsichtigt ist.

Vinylchlorid wurde mit Trichlorsilan in einem Hordenreaktor (Durchmesser 200mm, Länge 6000 mm) zu Vinyltrichlorsilan umgesetzt. Das Edukt Trichlorsilan wurde hierbei in einer Vorwärmstrecke auf 400 °C vorgewärmt. Am Kopf des Reaktors befand sich die Einspeisung von Trichlorsilan. Vinylchlorid wurde ebenfalls gasförmig und vorerhitzt über mehrere Einspeisestellen verteilt jeweils in der Achsmitte des Rohrreaktors eingedüst. Beim Austritt des Vinylchlorids an den Einspeisestellen war das Vinylchlorid von Trichlorsilan umhüllt, und die Reaktion zum Vinyltrichlorsilan fand nun in kurzen Reaktionszonen unter Vermeidung der nachteiligen Wandreaktion statt. Das zugeführte Trichlorsilan wurde im Überschuss zugeführt und konnte deshalb an den Vinylchlorid-Einspeisestellen niemals vollständig verbraucht werden. Es ergab sich an den Vinylchlorid-Einspeisestellen eine reine Gasphasenreaktion zwischen Trichlorsilan und Vinylchlorid. Die ausbeutemindernden Wandreaktionen, die beispielsweise zur Bildung von Ruß führen, wurden verhindert.

Die Reaktion erfolgte kontinuierlich in dem beschriebenen Hordenreaktor mit abschnittsweiser Einspeisung von Vinylchlorid in den heißen Trichlorsilan-Strom.

Der Reaktor ist prinzipiell als ein rückvermischungsarmer Rohrreaktor anzusehen. Über die Verteilung des Vinylchlorid-Stromes auf mehrere Einspeisestellen gelang es, die Temperaturführung im Reaktor zu optimieren. Am Ende des Reaktors befand sich eine Quenchung des heißen Reaktionsgase mit flüssigem Rohprodukt, wodurch die Folgereaktion zum Siliciumtetrachlorid (V) weitestgehend unterdrückt wurde.

Im Beispiel wurden 650 kg/h Trichlorsilan am Eingang des Reaktors bei 400 °C eingespeist. Im ersten Teil des Reaktors erfolgte die weitere Erhitzung des Trichlorsilan-Stromes auf ca. 550 °C. In den heißen Trichlorsilan-Strom wurde bei z=800mm (= Abstand gemessen vom linken Rand des Reaktors) die erste Portion Vinylchlorid (25 kg/h) eingespeist. Es folgen drei weitere Vinylchlorid-Einspeisungen im Abstand von 1000mm, an denen auch jeweils 25 kg/h Vinylchlorid eingespeist wurden. 1000 mm hinter der vierten und letzten Einspeisestelle wurde das heiße Reaktionsgas mit flüssigem Rohprodukt auf ca. 40 °C gequencht. Der Umsatz des Vinylchlorids lag bei 86 %, die Selektivität betrug 95 %.

Der verwendete Reaktor hat einen Durchmesser von 200mm und eine Länge von 6000mm. Es ergaben sich die folgende Massenströme der Reaktionsmischung am Ausgang des Reaktors:

| | |
|---|---|
| Vinylchlorid = 14,0 kg/h | Trichlorsilan = 447,9 kg/h |
| Vinyltrichlorsilan = 211,1 kg/h | Chlorwasserstoff = 47,6 kg/h |
| Siliciumtetrachlorid = 17,4 kg/h | Hochsieder/weitere |
| | Nebenkomponenten = 11,8 kg/h |

Damit hatte dieser Reaktor eine monatliche Produktionsleistung von 152 t Vinyltrichlorsilan und eine Raumzeitausbeute von 1.120 kg/(m³*h). Es wurde eine höhere Raumzeitausbeute als in den oben beschriebenen Vergleichsbeispielen mit Reaktoren aus dem Stand der Technik erreicht und die Vinyltrichlorsilan-Selektivität des verwendeten Hordenreaktors war mit 95 % ebenfalls höher als in den Vergleichs-beispielen. Die höhere Vinyltrichlorsilan-Selektivität wurde über einen geringeren Anfall an Nebenprodukt Siliciumtetrachlorid und Hochsiedern bzw. weiteren Nebenkomponenten erzielt.

Als Vorteile des erfindungsgemäßen Verfahrens und des nichterfindungsgemäßen Reaktors vom Typ "Hordenreaktor" sind die gesteigerte Selektivität und die gesteigerte Raumzeitausbeute bezüglich des Zielproduktes Vinyltrichlorsilan festzustellen, weil gezielt Wandreaktionen durch die Umhüllung mit einem Trichlorsilan-Strom verhindert werden. Weiterhin ist der Reaktor als rückvermischungsarm zu bezeichnen, wodurch im betrachteten Reaktionssystem weniger Nebenprodukte, z.B. Siliciumtetrachlorid, Ruß und 1,2-Bis(trichlorsilyl)ethan gebildet werden. Zudem wird über die abschnittsweise Einspeisung von Vinylchlorid ein optimales Temperaturprofil eingestellt, wodurch insbesondere die Nebenreaktion (2) zum Siliciumtetrachlorid (V) minimiert wird.

Dadurch, dass die Wandreaktion durch die Flankierung mit Trichlorsilan weitest-gehend verhindert wird, ist die Bildung von Ruß minimiert und die Intervalle für die Reinigungsvorgänge des Reaktors werden verlängert. Der erfindungsgemäß eingesetzte Hordenreaktor kann bei einem deutlich gesteigerten Vinylchlorid-Umsatz und Vinylchlorid-Durchsatz betrieben werden, weil er rückvermischungsarm arbeitet. Dadurch steigt die Raumzeitausbeute an Vinyltrichlorsilan gegenüber den herkömmlich verwendeten Reaktoren an. Über die Optimierung der Anzahl der Vinylchlorid-Einspeisestellen und über die Optimierung der Vinylchlorid-Einspeisemengen kann das Temperaturprofil so optimiert werden, dass die Selektivität bezüglich Vinyltrichlorsilan maximal wird. Idealerweise sind die Vinylchlorid-Teilmengenströme an den Einspeisestellen über Temperatur-Regelkreise gesteuert. Weiterhin sind die Einspeisestellen für Vinylchlorid vorzugsweise mit einem 90°-Bogen versehen, so dass das Vinylchlorid mit der Strömungsrichtung aufgegeben wird.

## Patentansprüche

1. Verfahren zur Herstellung von Alkenylhalogensilanen durch Umsetzung von Alkenylhalogenid ausgewählt aus der Gruppe Vinylhalogenid, Vinylidenhalogenid oder Allylhalogenid mit Halogensilan ausgewählt aus der Gruppe Mono-, Di- oder Trihalogensilan in der Gasphase in einem Reaktor, der ein mit einem Einlass (2) an einem Rohrende und mit einem Auslass (3) an dem anderen Rohrende ausgestattetes Reaktionsrohr (1) umfasst sowie eine Gaseinleitungsvorrichtung (4) aufweist, die mehrere, in Richtung der Längsachse des Reaktionsrohres (1) voneinander beabstandete und in das Reaktionsrohr (1) mündende Gaseinspeisestellen (5) aufweist, wobei Mono-, Di- oder Trihalogensilan durch den Einlass (2) in das Reaktionsrohr (1) geleitet wird und in Richtung Auslass (3) durch das Reaktionsrohr (1) strömt, und wobei Vinylhalogenid, Vinylidenhalogenid oder Allylhalogenid abschnittsweise durch die Gaseinspeisestellen (5) in den Gasstrom im Innern des Reaktionsrohres (1) eingeleitet wird.

2. Verfahren nach Anspruch 1, **dadurch gekennzeichnet, dass** als Alkenylhalogenid Vinylchlorid, Vinylbromid, Vinylidenchlorid, Vinylidenbromid, Allylchlorid oder Allylbromid eingesetzt wird, insbesondere Vinylchlorid oder Allylchlorid, und dass als Halogensilan Di- oder Trichlorsilan oder Di- oder Tribromsilan eingesetzt wird, vorzugsweise Di- oder Trichlorsilan.

3. Verfahren nach Anspruch 1, **dadurch gekennzeichnet, dass** als Alkenylhalogenid Vinylchlorid oder Allylchlorid eingesetzt wird und dass als Halogensilan Trichlorsilan eingesetzt wird.

4. Verfahren nach Anspruch 1, **dadurch gekennzeichnet, dass** am Einlass (2) nur Mono-, Di- oder Trihalogensilan eingespeist wird, während über die Länge des Reaktionsrohres (1) verteilt an mehreren Stellen Alkenylhalogenid in das im Innern des Reaktionsrohres (1) strömende Gasgemisch eingespeist wird, insbesondere in die Hauptströmungsrichtung aufgegeben wird.

5. Verfahren nach Anspruch 1, **dadurch gekennzeichnet, dass** das Alkenylhalogenid durch die Gaseinleitungsvorrichtung (4) in die Mitte des Rohrreaktors über zwei bis zehn, bevorzugt über drei bis sechs Gaseinspeisestellen (5) hinweg eingespeist wird, wobei der Abstand zwischen der ersten Gaseinspeisestelle (5) und dem Einlass (2) zwischen 20mm und 1000mm beträgt.

6. Verfahren nach Anspruch 5, **dadurch gekennzeichnet, dass** der Abstand zwischen zwei Gaseinspeisestellen (5) zwischen 100 mm und 2000 mm beträgt, und dass die Gaseinspeisestellen (5) vorzugsweise äquidistant angeordnet sind.

7. Verfahren nach Anspruch 1, **dadurch gekennzeichnet, dass** an der Gaseinleitungsvorrichtung (4) Mittel vorgesehen sind, mit denen der Mengenstrom des Alkenylhalogenids an den Gaseinspeisestellen (5) variiert werden kann.

8. Verfahren nach Anspruch 7, **dadurch gekennzeichnet, dass** der Mengenstrom des Alkenylhalogenids zwischen den verschiedenen Gaseinspeisestellen (5) gleichmäßig aufgeteilt wird oder dass der Mengenstrom des Alkenylhalogenids zwischen den verschiedenen Gaseinspeisestellen (5) beliebig variiert wird, wobei als Minimal-Menge pro Gaseinspeisestelle (5) ein Mengenstrom Alkenylhalogenid / (n·5) gewählt wird, wobei als Maximal-Menge pro Gaseinspeisestelle (5) ein Mengenstrom Alkenylhalogenid / (n·½) gewählt wird, wobei n die Gesamtzahl der Gaseinspeisestellen (5) im Reaktor bedeutet mit n ≥ 2.

9. Verfahren nach Anspruch 1, **dadurch gekennzeichnet, dass** das Einsatz-verhältnis von Mono-, Di- oder Trihalogensilan zu Alkenylhalogenid zwischen 1,0 und 10 mol : mol liegt, bevorzugt zwischen 2,0 und 4,0 mol : mol.

10. Verfahren nach Anspruch 1, **dadurch gekennzeichnet, dass** am produktseitigen Ende des Reaktionsrohres (1) das heiße Reaktionsgemisch mit flüssigem Rohprodukt gequencht wird.

11. Verfahren nach Anspruch 1, **dadurch gekennzeichnet, dass** die Temperatur im Innern des Reaktionsrohres (1) zwischen 400 und 700 °C liegt, bevorzugt zwischen 500 und 650 °C.

12. Verfahren nach Anspruch 1, **dadurch gekennzeichnet, dass** der Druck im Innern des Reaktionsrohres (1) zwischen 1,0 und 2,0 bar abs liegt, bevorzugt zwischen 1,0 und 1,5 bar abs.

13. Verfahren nach Anspruch 1, **dadurch gekennzeichnet, dass** die Teilmengen-ströme von Alkenylhalogenid an den Gaseinspeisestellen (5) jeweils über Temperatur-Regelkreise gesteuert werden.

14. Verfahren nach Anspruch 1, **dadurch gekennzeichnet, dass** die Verweilzeit des Reaktionsgemisches im Reaktor von der ersten Gaseinspeisestelle (5) bis zum Auslas (3) im Bereich zwischen 0,5 und 10 sec, bevorzugt zwischen 1,5 und 4 sec, liegt.

## Claims

1. Process for preparing alkenylhalosilanes by reacting alkenyl halide selected from the group of vinyl halide, vinylidene halide and allyl halide with halosilane selected from the group of mono-, di- and trihalosilane in the gas phase in a reactor comprising a reaction tube (1) equipped with an inlet (2) at one end of the tube and with an outlet (3) at the other end of the tube, and having a gas inlet device (4) having a plurality of gas feed points (5) which are spaced apart in the direction of the longitudinal axis of the reaction tube (1) and open into the reaction tube (1), wherein mono-, di- or trihalosilane is passed through the inlet (2) into the reaction tube (1) and flows through the reaction tube (1) in the direction of outlet (3), and wherein vinyl halide, vinylidene halide or allyl halide flows through the gas feed points (5) in sections into the gas stream in the interior of the reaction tube (1).

2. Process according to Claim 1, **characterized in that** the alkenyl halide used is vinyl chloride, vinyl bromide, vinylidene chloride, vinylidene bromide, allyl chloride or allyl bromide, especially vinyl chloride or allyl chloride, and **in that** the halosilane used is di- or trichlorosilane or di- or tribromosilane, preferably di- or trichlorosilane.

3. Process according to Claim 1, **characterized in that** the alkenyl halide used is vinyl chloride or allyl chloride, and **in that** the halosilane used is trichlorosilane.

4. Process according to Claim 1, **characterized in that** only mono-, di- or trihalosilane is fed in at the inlet (2), while alkenyl halide is fed into the gas mixture flowing in the interior of the reaction tube (1) at several points distributed over the length of the reaction tube (1), and is especially introduced into the main flow direction.

5. Process according to Claim 1, **characterized in that** the alkenyl halide is fed by means of the gas inlet device (4) into the middle of the tubular reactor via two to ten, preferably via three to six, gas feed points (5), the distance between the first gas feed point (5) and the inlet (2) being between 20 mm and 1000 mm.

6. Process according to Claim 5, **characterized in that** the distance between two gas feed points (5) is between 100 mm and 2000 mm, and **in that** the gas feed points (5) are preferably arranged equidistantly.

7. Process according to Claim 1, **characterized in that** means by which the flow rate of the alkenyl halide to the gas feed points (5) can be varied are provided in the gas inlet device (4).

8. Process according to Claim 7, **characterized in that** the flow rate of the alkenyl halide is divided equally between the different gas feed points (5), or **in that** the flow rate of the alkenyl halide is varied as desired between the different gas feed points (5), the minimum amount selected per gas feed point (5) being a flow rate of alkenyl halide / (n·5), and the maximum amount selected per gas feed point (5) being a flow rate of alkenyl halide / (n·½), where n is the total number of gas feed points (5) in the reactor, with n ≥ 2.

9. Process according to Claim 1, **characterized in that** the use ratio of mono-, di- or trihalosilane to alkenyl halide is between 1.0 and 10 mol:mol, preferably between 2.0 and 4.0 mol:mol.

10. Process according to Claim 1, **characterized in that** the hot reaction mixture is quenched with a liquid crude product at the product end of the reaction tube (1).

11. Process according to Claim 1, **characterized in that** the temperature in the interior of the reaction tube (1) is between 400 and 700°C, preferably between 500 and 650°C.

12. Process according to Claim 1, **characterized in that** the pressure in the interior of the reaction tube (1) is between 1.0 and 2.0 bar abs, preferably between 1.0 and 1.5 bar abs.

13. Process according to Claim 1, **characterized in that** the component flow rates of alkenyl halide to the gas feed points (5) are each controlled via closed-loop temperature control circuits.

14. Process according to Claim 1, **characterized in that** the residence time of the reaction mixture in the reactor from the first gas feed point (5) to the outlet (3) is in the range between 0.5 and 10 sec, preferably between 1.5 and 4 sec.

## Revendications

1. Procédé pour la préparation d'alcénylhalogénosilanes par transformation d'un halogénure d'alcényle, choisi dans le groupe formé par un halogénure de vinyle, un halogénure de vinylidène ou un halogénure d'allyle, avec un halogénosilane, choisi dans le groupe formé par un monohalogénosilane, un dihalogénosilane ou un trihalogénosilane, en phase gazeuse dans un réacteur qui comprend un tube de réaction (1), pourvu d'une entrée (2) en une extrémité de tube et d'une sortie (3) en l'autre extrémité de tube, ainsi qu'un dispositif (4) d'introduction de gaz, qui présente plusieurs sites (5) d'injection de gaz écartés les uns des autres dans le sens de l'axe longitudinal du tube de réaction (1) et débouchant dans le tube de réaction (1), le monohalogénosilane, le dihalogénosilane ou le trihalogénosilane étant guidé à travers l'entrée (2) dans le tube de réaction (1) et s'écoulant vers la sortie (3) à travers le tube de réaction (1) et l'halogénure de vinyle, l'halogénure de vinylidène ou l'halogénure d'allyle étant introduit par sections via les sites (5) d'injection de gaz dans le flux gazeux à l'intérieur du tube de réaction (1).

2. Procédé selon la revendication 1, **caractérisé en ce qu'**on utilise, comme halogénure d'alcényle, le chlorure de vinyle, le bromure de vinyle, le chlorure de vinylidène, le bromure de vinylidène, le chlorure d'allyle ou le bromure d'allyle, en particulier le chlorure de vinyle ou le chlorure d'allyle et **en ce qu'**on utilise, comme halogénosilane, le dichlorosilane ou le trichlorosilane ou le dibromosilane ou le tribromosilane, de préférence le dichlorosilane ou le trichlorosilane.

3. Procédé selon la revendication 1, **caractérisé en ce qu'**on utilise, comme halogénure d'alcényle, le chlorure de vinyle ou le chlorure d'allyle et **en ce qu'**on utilise, comme halogénosilane, le trichlorosilane.

4. Procédé selon la revendication 1, **caractérisé en ce qu'**on injecte, au niveau de l'entrée (2), uniquement du monohalogénosilane, du dihalogénosilane ou du trihalogénosilane, alors qu'on injecte, de manière répartie sur la longueur du tube de réaction (1), en différents sites, l'halogénure d'alcényle dans le mélange gazeux s'écoulant à l'intérieur du tube de réaction (1), en l'introduisant en particulier dans le sens d'écoulement principal.

5. Procédé selon la revendication 1, **caractérisé en ce que** l'halogénure d'alcényle est injecté par le dispositif (4) d'introduction de gaz au centre du tube de réaction via deux à dix, de préférence via trois à six, sites (5) d'injection de gaz, la distance entre le premier site (5) d'injection de gaz et l'entrée (2) étant située entre 20 mm et 1000 mm.

6. Procédé selon la revendication 5, **caractérisé en ce que** la distance entre deux sites (5) d'injection de gaz est située entre 100 mm et 2000 mm et **en ce que** les sites (5) d'injection de gaz sont de préférence disposés de manière équidistante.

7. Procédé selon la revendication 1, **caractérisé en ce que** des moyens sont prévus sur le dispositif (4) d'introduction de gaz, qui permettent de varier le débit massique d'halogénure d'alcényle au niveau des sites (5) d'injection de gaz.

8. Procédé selon la revendication 7, **caractérisé en ce que** le débit massique d'halogénure d'alcényle est réparti régulièrement entre les différents sites (5) d'injection de gaz ou **en ce que** le débit massique d'halogénure d'alcényle est varié de manière quelconque entre les différents sites (5) d'injection de gaz, un débit massique d'halogénure d'alcényle/(n*5) étant choisi comme quantité minimale par site (5) d'injection de gaz, un débit massique d'halogénure d'alcényle/(n*1/2) étant choisi comme quantité maximale par site (5) d'injection de gaz, n signifiant le nombre total de sites (5) d'injection de gaz dans le réacteur, avec n ≥ 2.

9. Procédé selon la revendication 1, **caractérisé en ce que** le rapport d'utilisation de monohalogénosilane, de dihalogénosilane ou de trihalogénosilane à halogénure d'alcényle est situé entre 1,0 et 10 mole:mole, de préférence entre 2,0 et 4,0 mole:mole.

10. Procédé selon la revendication 1, **caractérisé en ce que** le mélange réactionnel chaud est refroidi brusquement par du produit brut liquide en l'extrémité côté produit du tube de réaction (1).

11. Procédé selon la revendication 1, **caractérisé en ce que** la température à l'intérieur du tube de réaction (1) est située entre 400 et 700°C, de préférence entre 500 et 650°C.

12. Procédé selon la revendication 1, **caractérisé en ce que** la pression à l'intérieur du tube de réaction (1) est située entre 1,0 et 2,0 bars abs, de préférence entre 1,0 et 1,5 bar abs.

13. Procédé selon la revendication 1, **caractérisé en ce que** les débits massiques partiels d'halogénure d'alcényle au niveau des sites (5) d'injection de gaz sont à chaque fois régulés via des circuits de régulation de la température.

14. Procédé selon la revendication 1, **caractérisé en ce que** la durée de séjour du mélange réactionnel dans le réacteur, du premier site (5) d'injection de gaz jusqu'à la sortie (3), est située dans la plage entre 0,5 et 10 sec, de préférence entre 1,5 et 4 sec.
